# EUROPEAN PATENT APPLICATION

(11) **EP 4 528 488 A1**
(43) Date of publication of application: **26.03.2025**
(21) Application number: 23881729.0
(22) Date of filing: 19.10.2023
(51) Int. Cl.: G06F 8/658, G06F 21/57

(54) **METHOD FOR OBTAINING SERVICE PACK AND COMMUNICATION APPARATUS**

(30) Priority: 25.10.2022 CN 202211310997
(71) Applicant: Huawei Technologies Co., Ltd., Shenzhen, Guangdong 518129 (CN)
(72) Inventor: YANG, Cheng, Shenzhen, Guangdong 518129 (CN); YIN, Yonghong, Shenzhen, Guangdong 518129 (CN); LI, Yalei, Shenzhen, Guangdong 518129 (CN); WANG, Zhen, Shenzhen, Guangdong 518129 (CN); DING, Lei, Shenzhen, Guangdong 518129 (CN)
(74) Representative: Maiwald GmbH
(86) International application number: PCT/CN2023/125486
(87) International publication number: WO 2024/088151

(57) **Abstract**

Embodiments of this application provide a patch package obtaining method and a communication apparatus. The method is applicable to a related field like the field of communication technologies. The method includes: determining a first difference object based on a difference between a first source file and a second source file, where the first source file is used to remedy a vulnerability of the second source file, the second source file is a source file that is associated with the first source file and that is in a first project, and the first project includes one or more source files; obtaining a patch source file based on a code segment and a header file of a second difference object, where the second difference object is an object that is included in the first difference object and that belongs to the first source file; and compiling the patch source file based on the first project to obtain a patch package.

## Description

### CROSS-REFERENCE TO RELATED APPLICATIONS

This application claims priority to Chinese Patent Application No. 202211310997.1, filed with the China National Intellectual Property Administration on October 25, 2022 and entitled "PATCH PACKAGE OBTAINING METHOD AND COMMUNICATION APPARATUS", which is incorporated herein by reference in its entirety.

### TECHNICAL FIELD

This application relates to the field of communication technologies, and in particular, to a patch package obtaining method and a communication apparatus.

### BACKGROUND

Patch technologies are effective ways to address system software and/or application vulnerabilities. The patch technologies may be classified into a cold patch technology and a hot patch technology based on whether a process in which a patch takes effect affects service running. A patch technology in which a patch can take effect only after a system is restarted may be referred to as a cold patch technology, and the cold patch technology implements vulnerability remediation in a manner like file replacement or overwriting. An overlay technology is used as an example. According to the overlay technology, a file system is used to cover upper and lower layers of a faulty component or module, for example, a file carrying a patch overwrites the faulty component or module, and the system is restarted to make the patch take effect. A hot patch technology that can make a patch take effect during system running implements vulnerability remediation by changing an execution process of a defect function. For example, when the defect function is executed, a header jump instruction of the defect function, or an ftrace feature and a patch engine framework is/are depended on, to jump to a patch area to execute a patch function used to remedy the defect function. kPatch is used as an example. kPatch enables compilation items "-ffunction-sections" and "-fdata-sections" of "section separation" of a gcc compiler, to separate a function from data in a form of section (section) when the function and data are compiled to redirectable files, then triggers the gcc compiler to compile an original project and a project carrying a patch file, compares two compilation files obtained through compilation, extracts, to a new redirectable file, a part that is in a compilation file corresponding to the project carrying the patch file and that is different from a compilation file corresponding to the original project, fills in a redirection table, and completes a compilation link, to obtain a patch package.

However, for a product with a statically compiled macro kernel, for example, a product mainly using a microcontroller unit (microcontroller unit, MCU) chip, because most system images of the product are statically compiled macro kernels, and a kernel mode and a user mode are not distinguished, there is a strong coupling relationship between components or modules. In this case, changing one of the components or modules may cause an overall image difference, resulting in problems such as breakdown. Therefore, the foregoing cold patch technology is not applicable to vulnerability remediation of the product mainly using the MCU chip.

In addition, conventional mainstream hot patch technologies include kSplice, kGraft, kPatch, and the like. In a process of generating a patch package, the hot patch technologies depend heavily on an X86 platform tool, a specific compiler capability, and the like, resulting in difficulty in technology reuse. kPatch is used as an example. In a process of generating a patch package, kPatch depends on capabilities of the foregoing two compilation options in the gcc compiler, and in a process of compiling a source file by using the gcc compiler to obtain the patch package, a tool integrated in a kPatch tool library for section comparison, reassembly, and redirection is required to extract a difference between two redirectable files obtained by the gcc compiler through compilation, and redirect the extracted difference to a new redirectable file. The tool supports only X86 and ppc architectures, and does not support a mainstream architecture (for example, an ARM architecture) of an MCU chip platform. In addition, different compilers support the foregoing two compilation options to different degrees. For example, some compilers do not support the two compilation options, and some compilers support only a part of functions of the foregoing two compilation options. In addition, it is difficult to find a capability of supporting the foregoing two compilation options in a product mainly based on the MCU chip platform. Therefore, the conventional hot patch technology is also not applicable to vulnerability remediation of the product mainly using the MCU chip.

### SUMMARY

Embodiments of this application provide a patch package obtaining method and a communication apparatus, to reduce dependency of a patch package generation process on capabilities of a platform and a specific compiler, and improve universality of a patch package.

According to a first aspect, a patch package obtaining method is provided. A patch package obtained by using the method may be used to a product mainly using an MCU chip, for example, a wearable device and a smart home device. The method may be implemented by using a device that can make a patch package, for example, a patch server or a personal computer. The method includes: determining a first difference object based on a difference between a first source file and a second source file, where the first source file is used to remedy a vulnerability of the second source file, the second source file is a source file that is associated with the first source file and that is in a first project, and the first project includes one or more source files; obtaining a patch source file based on a code segment and a header file of a second difference object, where the second difference object is an object that is included in the first difference object and that belongs to the first source file; and compiling the patch source file based on the first project to obtain a patch package.

A difference comparison process in embodiments of this application occurs in a source file (for example, the source file is a source file before compilation preprocessing, or a file obtained after compilation preprocessing) phase. The comparison process may be performed on any platform or in any compiler environment, and reduces dependency on a platform tool compared with a manner of extracting a difference by using a section comparison tool integrated in a kPatch library after two source files are compiled to obtain two redirectable files in the conventional technology. In addition, in embodiments of this application, after a difference object is obtained, the patch source file corresponding to the patch package may be obtained based on the difference object, and the patch package may be obtained after the patch source file is compiled based on the first project (which may also be referred to as an original project below). Operations such as reassembly and redirection do not need to be performed on independent sections generated by a function and a variable. This reduces dependency on a section separation capability of a compiler and section reassembly and redirection tools, and improves universality of the patch package.

In a possible design, the determining a first difference object based on a difference between a first source file and a second source file includes: performing difference comparison on the first source file and the second source file according to a syntax rule of the second source file, to determine difference content of the first source file and the second source file; and determining that a syntax structure corresponding to the difference content is the first difference object, where the syntax structure is used to define a function, a variable, and/or a constant.

A process of performing syntax analysis and difference comparison on the source file is not limited by a specific compilation environment or platform. Therefore, the difference comparison on the first source file and the second source file according to the syntax rule of the second source file may be performed in any compiler environment. This reduces dependency of a difference extraction process on a platform tool.

In a possible design, the method further includes: adding a first identifier to the second difference object, where the first identifier is used to distinguish between the second difference object and a third difference object, and the third difference object is an object that is included in the first difference object and that belongs to the second source file.

In static compilation, the entire original project needs to be compiled during compilation, that is, the third difference object in the original project needs to be compiled, and the first identifier is added to the second difference object, so that a compilation conflict can be avoided when the compiler compiles the second difference object and the third difference object.

In a possible design, the method further includes: adding a compilation keyword to the patch source file; or adding the compilation keyword to the second difference object, where the compilation keyword is used for forcible compilation.

Because content in the patch source file is not invoked, during compilation, if the compiler finds that some content is not invoked, the compiler optimizes the content. Therefore, the compilation keyword may be added to the patch source file or the compilation keyword may be added to each second difference object in the patch source file, so that the compiler forcibly compiles the content in the patch source file during compilation, to prevent the patch source file from being optimized and deleted.

In a possible design, the compiling the patch source file based on the first project to obtain a patch package includes: restoring a second project based on the first project, where the second project includes at least one source file, and the at least one source file includes the first source file; and compiling the restored second project and the patch source file to obtain the patch package.

The second project is a project carrying a patch. After the second project is obtained based on the first source file in the second project, the second project is restored by using the first project to obtain a project that is the same as the first project, so as to ensure that a compilation location of the second project is the same as a compilation location of the original project, and prevent patch content from causing a difference other than unrelated compilation time and version differences between the second project and the original project.

In a possible design, the compiling the patch source file includes: obtaining a redirection configuration template of a target compiler, where the target compiler is a compiler configured to compile the second project and the patch source file, and the redirection configuration template indicates a compilation location of the patch source file; and compiling the patch source file to the location indicated by the redirection configuration template.

The redirection configuration template is compilation orientation information of sections configured by a user based on different compilers, and is used to point the compilation location of the patch source file to a patch area, so that in a case in which the patch source file participates in the static compilation together with the second project, a key difference between the second project and the original project caused by the patch content is avoided.

In a possible design, the compiling the patch source file includes: determining a target object invoked by the second difference object, where the target object includes a target function, a target variable, and/or a target constant; if the target object belongs to the first project, obtaining a storage address of the target object; obtaining the target object based on the storage address; and compiling the second difference object based on the obtained target object.

The invocation of the second difference object in the patch source file to the original project is translated into access to an absolute address, so that the patch source file can directly access the target object in the original project, and the key difference between the second project and the original project caused by the patch content can be avoided.

In a possible design, the compiling the second project and the patch source file to obtain the patch package includes: compiling the second project and the patch source file to obtain a first image file; and extracting the patch package from the first image file.

A patch package that can be independently loaded and activated can be obtained by cutting an image file obtained by compiling the second project and the patch source file. The patch package does not need to be linked back to the second project for execution, so that a product mainly using an MCU chip can remedy a vulnerability by installing a patch.

In a possible design, before the extracting the patch package from the first image file, the method further includes: obtaining an address range of a second image file, and obtaining data of the first image file within the address range, where the second image file is an image file obtained by compiling the first project; comparing the data of the first image file within the address range with the second image file; and determining that a difference between the data of the first image file within the address range and the second image file includes only compilation time and/or a version number.

In other words, it is determined that a difference between an image file generated by compilation (the first image file) and an archived image file (an image file archived after the original project is compiled, namely, the second image file) comes only from data unrelated to content of the original project, for example, build time and a version number, so that a requirement of the static compilation can be met.

In a possible design, the extracting the patch package from the first image file includes: extracting a patch file from the first image file, where the patch file is a file compiled to the location indicated by the redirection configuration template; and adding link information of the second difference object and the third difference object, and first information to the patch file, to obtain the patch package, where the link information is used to associate the second difference object with the third difference object, the third difference object is the object that is included in the first difference object and that belongs to the second source file, the first information is basic information of the patch package, and the first information includes one or more of version information, check information, or backup information.

In other words, the link information of the second difference object and the third difference object, the version information, the check information, and the like are added to the patch file, so that the original project does not need to be modified in a process in which a terminal device loads the patch package, and the requirement of the static compilation can be met.

In a possible design, the method further includes: adjusting, based on orders of a code segment and a header file included in the third difference object, orders of the code segment and the header file included in the second difference object, so that adjusted orders of the code segment and the header file included in the second difference object are the same as the orders of the code segment and the header file included in the third difference object.

In other words, before the content in the patch source file is forcibly compiled, an order of the second difference object may be adjusted based on an order of the third difference object, so that accuracy of linking the second difference object and the third difference object is improved.

In a possible design, the method further includes: adding a second identifier to the patch source file, where the second identifier is used to prohibit initializing data in the patch package by using a kernel.

The data is initialized by using the kernel, and the kernel is a part of the original project. If the data is initialized by using the kernel, the original project may change. Therefore, the second identifier is added to prohibit the kernel from initializing the data in the patch package, so that a key change in the original project can be avoided.

In a possible design, the method further includes: generating an initialization migration function based on the patch source file, where the initialization migration function is used to initialize the data in the patch package.

After the second identifier is added, the terminal device does not initialize data in the patch source file in a restart process. Therefore, a corresponding initialization migration function needs to be generated to implement a data initialization function of the kernel, to improve an initialization process of a system.

In a possible design, the method further includes: performing compilation preprocessing on the first source file and the second source file, where the compilation preprocessing includes one or more of the following: deleting a comment and content not involved in compilation from the first source file and the second source file; replacing, with a function, content that is in the first source file and the second source file and that is used to invoke the function; or replacing a macro in the first source file and the second source file with a source language statement.

In other words, the comment and the content not involved in compilation are deleted from the first source file and the second source file, so that interference caused by the content not involved in compilation to the difference comparison process can be reduced. In addition, in the first source file and the second source file, the content that is used to invoke the function is replaced with the function, or the macro is replaced with the source language statement, so that accuracy of the obtained first difference object can be improved.

According to a second aspect, a communication apparatus is provided. The communication apparatus may be a device that can make a patch package, for example, a server or a personal computer, or may be a chip or a chip system used in the communication apparatus. The communication apparatus includes a communication interface and a processor, and optionally, further includes a memory. The memory is configured to store a computer program. The processor is coupled to the memory and the communication interface. When the processor reads the computer program or instructions, the communication apparatus is enabled to perform the method according to the first aspect.

According to a third aspect, a computer-readable storage medium is provided. The computer-readable storage medium is configured to store a computer program. When the computer program is run on a computer, the computer is enabled to perform the method according to the first aspect.

According to a fourth aspect, a computer program product is provided, including a computer program. When the computer program is run on a computer, the computer is enabled to perform the method according to the first aspect.

According to a fifth aspect, a chip system is provided, including a processor and an interface. The processor is configured to invoke instructions from the interface and run the instructions, to enable the chip system to implement the method according to the first aspect.

For beneficial effects of the second aspect to the fifth aspect, refer to beneficial effects of the first aspect. Details are not described again.

### BRIEF DESCRIPTION OF DRAWINGS

FIG. 1A is a flowchart of making a patch package;
FIG. 1B is a schematic flowchart of loading a patch package by a terminal device;
FIG. 2A is a diagram of a system architecture for vulnerability remediation according to an embodiment of this application;
FIG. 2B is a block diagram of a structure of a patch server according to an embodiment of this application;
FIG. 2C is a schematic flowchart of making a patch package by a patch server according to an embodiment of this application;
FIG. 2D is a diagram of another system architecture for vulnerability remediation according to an embodiment of this application;
FIG. 3 is a schematic flowchart of a patch package obtaining method according to an embodiment of this application;
FIG. 4A is a schematic flowchart of obtaining a patch source file according to an embodiment of this application;
FIG. 4B is a schematic flowchart of deriving patch components according to an embodiment of this application;
FIG. 5A is a schematic flowchart of another patch package obtaining method according to an embodiment of this application;
FIG. 5B is a schematic flowchart of another patch package obtaining method according to an embodiment of this application;
FIG. 6 is a schematic flowchart of loading a patch package by a terminal device according to an embodiment of this application; and
FIG. 7 is a diagram of a structure of a communication apparatus according to an embodiment of this application.

### DESCRIPTION OF EMBODIMENTS

The following clearly and completely describes the technical solutions in embodiments of this application with reference to accompanying drawings in embodiments of this application.

The following describes some terms in embodiments of this application, to facilitate understanding of a person skilled in the art.
1. A terminal device is a device that uses an MCU chip as a computing core, and includes, for example, a wearable device, a smart home device, a security protection device, a smart vehicle microcontroller unit, or an Internet of things device. The wearable device includes, for example, a smart headset, smart glasses, a smartwatch, a smart band, and an extended reality (extended reality, XR) device. The smart home device includes, for example, a speaker, an air conditioner, a refrigerator, a curtain, a light, a robotic vacuum cleaner, and a smart scale. The security protection device includes, for example, a smart electronic lock.
2. A patch server is a device that makes a patch package and can provide a patch package download service for the terminal device. Optionally, the patch server may be an over-the-air (over-the-air, OTA) server, a cloud server, or the like.
3. Code segment: One code segment may include one or more lines of code. A length of code included in the code segment is not limited in embodiments of this application. In the following descriptions, an example in which a code segment includes a line of code is used.
4. An application (application, app) is a software program that can implement one or more specific functions. Generally, one or more applications may be installed on the terminal device, for example, a Weather application, a Messages application, a multimedia messaging service application, or various mailbox applications. The application mentioned below may be an application installed when the terminal device is delivered from a factory, or may be an application downloaded from a network or obtained from another terminal device in a process in which a user uses the terminal device.
5. A full upgrade technology is used to perform a complete upgrade on system software and/or an application. For example, in the full upgrade technology, an installation package of the system software and/or the application may be replaced with a new upgrade package.
6. A differential upgrade technology is used to perform a differential upgrade on the system software and/or the application. The differential upgrade may include an incremental upgrade and/or a patch upgrade. The incremental upgrade may be used to expand and update a service function, and the patch upgrade may be used to remedy a vulnerability.
7. A header file is a carrier file that includes a declaration of a functional function and/or a data interface, and is mainly used to describe each invoked function and/or global variable. The header file does not include logic implementation code of a program. When performing compilation, a compiler may find a corresponding function library by using the header file, obtain content corresponding to the invoked function and/or variable, and use the obtained content to replace content describing the invoked function and/or variable.
8. A project configuration file is used to indicate the compiler to compile different sections to specified locations.
9. A project is information required for compilation, such as a plurality of source files that constitute the system software or an application architecture, information on which each source file depends, and a project configuration file.
10. A section (section) is a minimum unit that can be redirected. The section is a code block or data block that occupies continuous space in memory mapping, and has a same compilation attribute.

The following describes the technical solutions in embodiments of this application with reference to the accompanying drawings in embodiments of this application. In descriptions of embodiments of this application, "/" means "or" unless otherwise specified. For example, A/B may represent A or B. In this specification, "and/or" describes only an association relationship between associated objects and represents that three relationships may exist. For example, A and/or B may represent the following three cases: Only A exists, both A and B exist, and only B exists. In addition, in the descriptions of embodiments of this application, "a plurality of" means two or more.

The terms "first" and "second" mentioned below are merely intended for a purpose of description, and shall not be understood as an indication or implication of relative importance or implicit indication of a quantity of indicated technical features. Therefore, a feature limited by "first" or "second" may explicitly or implicitly include one or more features. In the descriptions of embodiments, unless otherwise specified, "a plurality of" means two or more.

As mentioned above, it is difficult to remedy a vulnerability in an MCU chip product by using the conventional cold patch technology and hot patch technology. The reasons are as follows:
(1) Most system images of the MCU chip product are statically compiled macro kernels, a kernel mode and a user mode are not distinguished, and there is a strong coupling relationship between components or modules. In this case, changing one of the components or modules may cause an overall image difference, resulting in problems such as breakdown. Therefore, the cold patch technology is not applicable to a product mainly using an MCU chip.
(2) When a patch engine framework is used to implement function jump, large image expansion occurs. However, most products mainly using an MCU chip have insufficient system resources and do not have sufficient space for loading an expanded image. In addition, because the product mainly using the MCU product has insufficient system resources, main code segments and data segments of a system are stored in a read-only memory (read-only memory, ROM). When the system runs, the chip directly obtains an instruction from the ROM for execution, and the instruction is not additionally loaded to a random access memory (random access memory, RAM). However, in a jump mechanism that depends on a header jump instruction of a defect function or depends on an ftrace feature and the patch engine framework, code segment and/or data segment data needs to be loaded to the RAM, and a jump instruction is inserted into a header of the defect function; or an empty instruction is inserted into a header of each function, and a jump location of each function is registered by using the patch engine framework. Therefore, the jump mechanism in which the jump instruction is inserted into the header of the defect function or function jump is implemented depending on the ftrace feature and the patch engine framework is not applicable to the product mainly using the MCU chip.
(3) Conventional mainstream hot patch technologies include kSplice, kGraft, kPatch, and the like. A process of making a patch package depends heavily on an X86 platform tool (for example, a difference extraction tool and a redirection tool), a kernel capability, and a specific compiler capability (for example, kPatch depends on a capability of a gcc compiler). However, it is difficult to find equivalent capability support in the product mainly using the MCU chip. Therefore, the conventional mainstream hot patch technologies are also not applicable to the product mainly using the MCU chip.

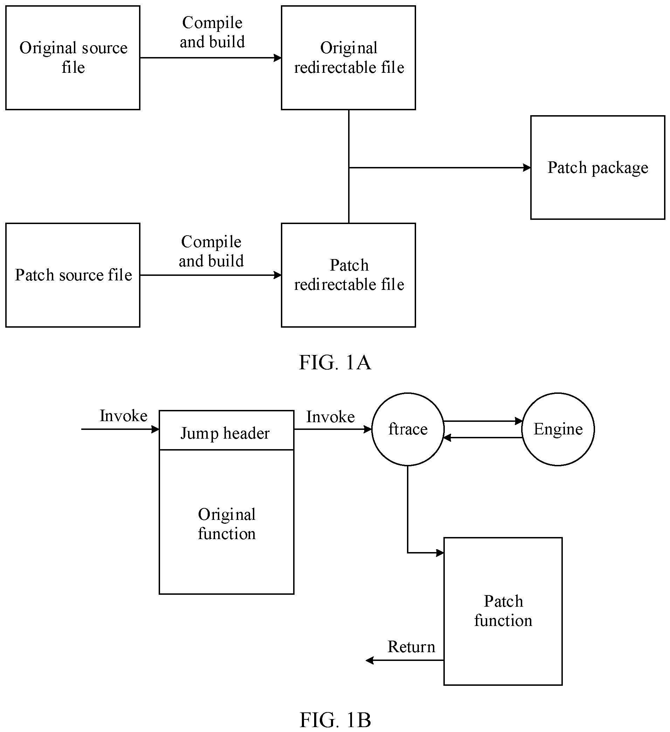

For example, FIG. 1A shows a process in which a patch server makes a patch package by using a kPatch technology. When building the patch package, the patch server enables compilation items "-ffunction-sections" and "-fdata-sections" of "section separation" of a gcc compiler, so that a function and data are separated from each other in a form of section when being compiled into redirectable files. Then, compilation and building are started twice, that is, a source file carrying a patch and a source file included in an original project are compiled to obtain an original redirectable file and a patch redirectable file. Content that is different from the original redirectable file is extracted from the patch redirectable file by using a difference extraction tool, the extracted different content is stored in a new redirectable file, a redirection table is filled in by using a patch tool to complete a compilation link, and finally, basic information of the patch is integrated to generate the patch package, where the basic information is necessary information for generating the patch package, for example, version information and verification information.

During compilation, a device (for example, a mobile phone) that remedies a vulnerability by using the kPatch technology needs to enable an ftrace compilation item in advance, insert an empty instruction into a header of each function, register a jump location of each function by using the patch engine framework, insert a jump instruction into a header of a to-be-remedied function when receiving the patch package generated by the patch server by using the kPatch technology, jump to a corresponding patch function execution process through an ftrace framework and the patch engine framework, and return to the original project to execute a function in the original project after executing the patch function. For a specific process, refer to FIG. 1B.

Therefore, currently, the product mainly using the MCU chip can remedy a vulnerability only through a full upgrade.

In view of this, embodiments of this application provide a patch package obtaining method. In the method, a patch server performs difference comparison on a source file carrying a patch and a source file in an original project (for example, performs difference comparison according to a syntax rule of the source file in the original project), to obtain a first difference object; stores an object that is included in the first difference object and that belongs to the source file carrying the patch into a patch source file; and then compiles the patch source file based on the original project to obtain a patch package. Difference comparison on the source files may be implemented by using a syntax parsing technology, for example, difference comparison is performed by using a method like character regular expression matching or syntax tree parsing. A difference extraction tool developed based on a specific platform is not required for difference extraction. During compilation, the patch source file can be compiled to a location specified by a preconfigured redirection configuration template based on the redirection configuration template, and operations such as reassembly and redirection do not need to be performed on independent sections generated by a function and a variable. This reduces dependency on a section separation capability of a compiler and section reassembly and redirection tools, and improves universality of the patch package.

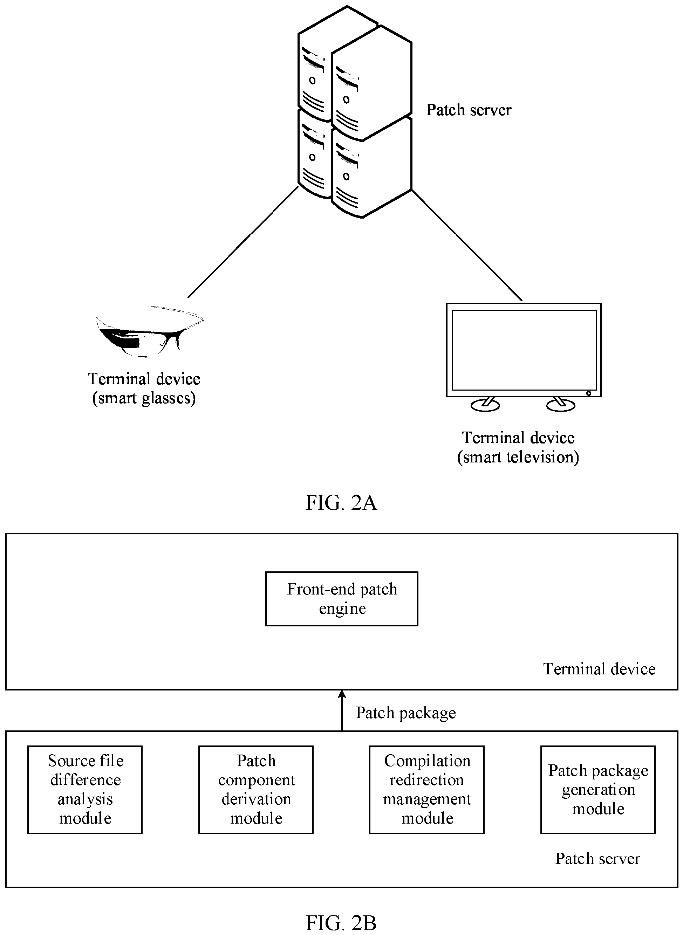

FIG. 2A shows a system architecture for vulnerability remediation according to an embodiment of this application. The system architecture includes a terminal device and a patch server. The terminal device and the patch server may communicate with each other by using a communication network. The communication network is a local area network, for example, a short-range communication network like a wireless fidelity (wireless fidelity, Wi-Fi) hotspot network, a Wi-Fi direct network, a Bluetooth network, a Zigbee (Zigbee) network, or a near field communication (near field communication, NFC) network.

The patch server may receive a source file carrying a patch from research and development personnel, obtain a first difference object based on the source file carrying the patch and a source file of an original project, generate a patch source file based on a code segment in which an object that is included in the first difference object and that belongs to the source file carrying the patch is located and a header file on which the object depends, and compile the patch source file based on the original project to obtain a patch package.

The patch server may further interact with the terminal device through a communication connection, to notify the terminal device of a latest version number corresponding to system software and/or an installed application of the terminal device. The terminal device may determine, based on the version number, whether there is a version update requirement, and may send an upgrade request to the patch server if there is a version update requirement. When receiving the upgrade request from the terminal device, the patch server may select a corresponding patch package based on an identifier of the terminal device and send the patch package to the terminal device, so that the terminal device can remedy a vulnerability based on the patch package. For example, the patch server may determine, based on the identifier of the terminal device, a model of an MCU chip used by the terminal device, and determine, based on the model of the MCU chip, the patch package corresponding to the terminal device.

Refer to FIG. 2B. Optionally, the patch server includes a source file difference analysis module, a patch component derivation module, a compilation redirection management module, and a patch package generation module, and the terminal device includes a front-end patch engine.

The source file difference analysis module is configured to: perform difference comparison on a first source file and a second source file, or perform difference comparison on intermediate files generated after compilation preprocessing is performed on the first source file and the second source file, to determine difference content (referred to as a difference for short below) between the first source file and the second source file; determine complete syntax structure objects such as functions and variables in which the difference is located in each of the first source file and the second source file; and use the complete syntax structure objects as the first difference object, where an object that is included in the first difference object and that belongs to the first source file is a second difference object, and an object that is included in the first difference object and that belongs to the second source file is a third difference object.

The patch component derivation module is configured to: copy, to a new source file, a code segment in which the second difference object is located and a header file on which the second difference object depends, to obtain a patch source file; add a first identifier, namely, a patch identifier, to the second difference object in the patch source file, for example, add a patch suffix to the second difference object, to prevent a static compilation conflict; and add a compilation keyword to the patch source file, or add a compilation keyword to the second difference object in the patch source file and the header file on which the second difference object depends, to forcibly compile content in the patch source file.

Optionally, the patch component derivation module may further check, according to a syntax rule of the second source file, an order of a code segment included in the second difference object in the patch source file. If the order of the code segment included in the second difference object in the patch source file is different from an order of a code segment included in the third difference object in the second source file, the patch component derivation module adjusts, based on orders of the code segment and a header file that are included in the third difference object, orders of the code segment and a header file that are included in the second difference object in the patch source file, so that the orders of the code segment and the header file that are included in the second difference object in the patch source file are the same as the orders of the code segment and the header file that are included in the third difference object in the second source file.

Optionally, the patch component derivation module may further parse an invocation performed by the second difference object to a target object (for example, a static function or a global variable) in an original project, obtain a storage address of the target object based on each object of the original project archived in the patch server and an address mapping file (a map mapping table) corresponding to the storage address of the object, and translate the invocation performed by the second difference object in the patch source file to the target object into access to an absolute address.

Optionally, because each object in the original project has a unique fixed storage address, a mapping relationship between each object and the storage address of the object is managed by using the foregoing map mapping table. During static compilation, if a compiled project is different from the original project, an error may occur when the patch server invokes a function according to the map mapping table archived by the original project. Therefore, after obtaining the patch source file, the patch component derivation module may further restore, based on the original project, a second project (which may also be referred to as a patch project below) including the first source file, and the restored patch project is the same as the original project.

The compilation redirection management module is configured to: identify a compilation environment, for example, identify a compiler that compiles the original project; obtain a redirection cooperation template corresponding to the compiler; copy the redirection configuration template to a corresponding location of a project configuration file; trigger compilation and building; and compile the original project and the patch source file, where compiling the original project is compiling a source file included in the original project. During compilation, the redirection management module compiles, to a specified location in a patch area by using the project configuration file and based on the redirection configuration template, the code segment and a data segment that are corresponding to the second difference object in the patch source file, to implement compilation isolation between content of the patch source file and the original project. Optionally, the compilation redirection management module may further add a second identifier to the patch source file, to prohibit the terminal device from initializing data in the patch package by using a kernel; and generate an initialization migration function based on the second difference object in the patch source file, to initialize the data in the patch package.

The patch package generation module is configured to obtain a first image file corresponding to the original project and the patch source file after the original project and the patch source file are compiled. The patch package generation module is configured to: split the first image file to obtain a patch area binary file (also referred to as a patch file below); and add, in the patch file (for example, a header of the patch file), link information between each to-be-remedied object (namely, each object in the foregoing third difference objects) and a remedied object (namely, an object corresponding to the to-be-remedied object in the second difference object) and basic information necessary for generating the patch package, where the basic information includes, for example, version information, check information, and/or backup information, and the link information is used to associate the second difference object with the third difference object.

The front-end patch engine is configured to: load the patch package from the patch server to the patch area, execute the initialization migration function generated by the redirection management module, initialize information in the patch package, then generate jump machine code based on address mapping information of the to-be-remedied object and the remedied object corresponding to the to-be-remedied object, replace a header of the to-be-remedied object, back up data obtained before the header of the to-be-remedied object is replaced to a header of the patch package, and update the check information to complete patch activation.

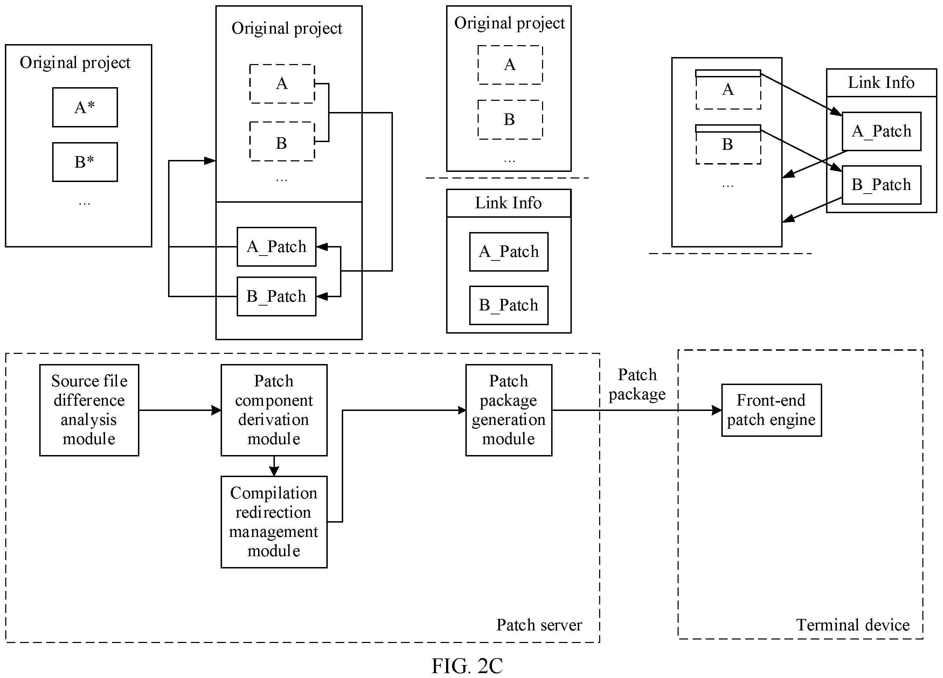

For example, for an execution result of each module in FIG. 2B, refer to FIG. 2C. In the figure, A* and B* are difference objects (namely, the second difference objects) determined by the source file difference analysis module, A and B are objects obtained after the patch component derivation module restores the patch project based on the original project, A_Patch and B_Patch are patch content derived by the patch component derivation module, an area in which A_Patch and B_Patch are located is the patch source file obtained by the patch component derivation module, and Link info is necessary information such as verification information and link information generated by the patch package generation module to obtain the patch file.

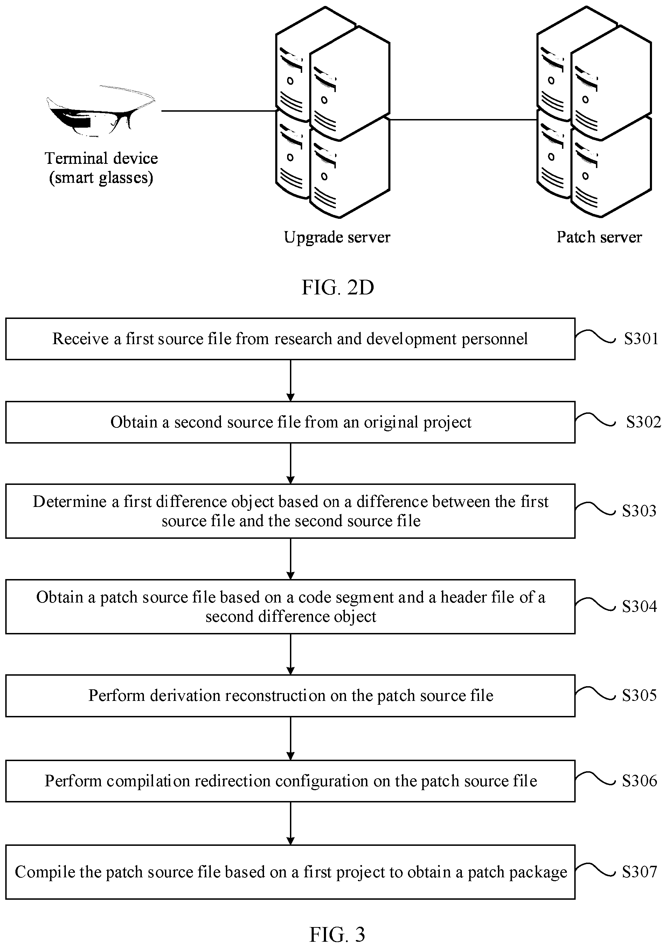

FIG. 2D shows another system architecture for vulnerability remediation according to an embodiment of this application. The system architecture includes a terminal device, a patch server, and an upgrade server. The upgrade server may separately communicate with the patch server and the terminal device. After generating a patch package based on a source file carrying a patch from research and development personnel, the patch server sends the patch package to the upgrade server. The upgrade server stores the received patch package based on a version number. The upgrade server may notify, through a communication connection to the terminal device, the terminal device of a latest version number corresponding to system software and/or an installed application of the terminal device. The terminal device may determine, based on the version number, whether there is a version update requirement, and may send an upgrade request to the upgrade server if there is a version update requirement. When receiving the upgrade request from the terminal device, the upgrade server may select a corresponding patch package based on an identifier of the terminal device and send the patch package to the terminal device, so that the terminal device can remedy a vulnerability based on the patch package. For example, the upgrade server may determine, based on the identifier of the terminal device, a model of an MCU chip used by the terminal device, and determine, based on the model of the MCU chip, the patch package corresponding to the terminal device.

It should be noted that the foregoing two system architectures for software vulnerability remediation are merely examples, and are not intended to limit embodiments of this application. For example, the system architecture may further include a software development device, configured to: develop the source file carrying the patch, and submit the source file carrying the patch to the patch server, so that the patch server can make the patch package.

Based on the foregoing content, the following describes the method provided in embodiments of this application with reference to FIG. 3 to FIG. 6.

FIG. 3 shows a patch package obtaining method according to an embodiment of this application. The method may be implemented by using the patch server shown in FIG. 2A to FIG. 2D or another communication apparatus. A patch package may be used to remedy a vulnerability of system software of a product mainly using an MCU chip and/or an application installed on a product of this type. In the following embodiment, an example in which a patch package used to remedy a vulnerability of an app 1 is obtained is used.

S301: A patch server receives a first source file from research and development personnel.

The first source file is a file used to remedy the vulnerability of the app 1, and the first source file includes one or more files that carry a patch (that is, carry a patch used to remedy a vulnerability). When submitting the first source file, the research and development personnel may separately submit the one or more files, or may submit an entire patch project, where the patch project includes the one or more files that carry the patch, and at least one source file that does not carry the patch in a project of the app 1. The project of the app 1 is a project of the app 1 that is locally stored in a device used by the research and development personnel for software development.

S302: The patch server obtains a second source file from an original project.

The original project is the project of the app 1 stored in the patch server, the original project includes one or more source files, and the second source file is a source file associated with the first source file in the original project.

If the one or more files are submitted separately, when receiving the one or more files, the patch server may obtain a corresponding source file (namely, the second source file) from the original project based on a name of the one or more files. For example, the project of the app 1 includes a file 1, a file 2, and a file 3. The research and development personnel modify only a function 1 in the file 1, to obtain a new function 1 and a new file 1 including the new function 1, for example, obtain a function 1' and a file 1' including the function 1'. When receiving the file 1', the patch server may obtain the file 1 corresponding to the file 1' from the original project of the app 1, and determine that the file 1 in the original project is the second source file. Optionally, if the file 2 references the file 1, it indicates that there is also an association relationship between the file 2 and the file 1', and the patch server may determine that the file 1 and the file 2 in the original project are the second source file.

If the first source file is submitted based on the patch project, after receiving the patch project, the patch server may further obtain, from the patch project, the first source file that carries the patch, and obtain, from the original project of the app 1 based on the first source file, the second source file associated with the first source file. Alternatively, the patch server may directly use the patch project as the first source file and use the original project as the second source file.

S303: The patch server determines a first difference object based on a difference between the first source file and the second source file.

The patch server may perform difference comparison on the first source file and the second source file according to a syntax rule of the second source file, to determine difference content of the first source file and the second source file. For example, the patch server may compare the first source file with the second source file by using a method like character regular expression matching or syntax tree parsing, to determine the difference content of the first source file and the second source file, where the difference content is, for example, a parameter, a macro, or a global variable in a function. The patch server may determine, as the first difference object, a syntax structure corresponding to the difference content, where the syntax structure is a structure used to define a function, a variable, a constant, or the like. The first difference object includes an object belonging to the first source file, for example, a second difference object, and includes an object belonging to the second source file, for example, a third difference object. It may be understood that content of parts other than a patch part of the second difference object and the third difference object is the same.

For example, the patch server determines, according to a syntax rule of the file 1, that different form the function 1 in the file 1, in the function 1' in the file 1', a parameter a is changed to a parameter b+c. The patch server may determine, as the first difference object, the function 1' including the parameter a and the function 1 including the parameter b+c, where the function 1' is the second difference object described above, and the function 1 is the third difference object described above.

Optionally, before performing difference comparison on the first source file and the second source file according to the syntax rule of the second source file, the patch server may further separately perform compilation preprocessing on the first source file and the second source file by using a compiler, to obtain a first intermediate file corresponding to the first source file and a second intermediate file corresponding to the second source file. Then, the patch server performs difference comparison on the first intermediate file and the second intermediate file according to a syntax rule of the second intermediate file, to determine the first difference object. The compilation preprocessing includes one or more of the following: deleting content not involved in compilation, for example, comments included in the first source file and the second source file, for example, deleting all "//" and "/* */"; and/or replacing, with content of a function, content that is in the first source file and the second source file and that is used to invoke the function, that is, expanding an inline function, for example, replacing compiled code of a function body with the function; and/or replacing a macro in the first source file and the second source file with a source language statement (that is, macro expansion), for example, replacing all macro names appearing in a program with character strings defined by macros. For example, a macro is defined as #define macro name character string 1. When the macro is expanded, the macro name in the program is replaced with the character string 1.

Optionally, if the patch server does not find, in the original project, the second source file associated with the first source file, it indicates that content of the first source file may be used to extend a function of the app 1, the first source file is a new file, and the patch server may determine the entire first source file as the first difference object. It may be understood that, if the second source file associated with the first source file does not exist in the original project, and the first difference object does not include the object belonging to the second source file, the first difference object is the second difference object described above.

S304: The patch server obtains a patch source file based on a code segment and a header file of the second difference object.

After obtaining the second difference object, the patch server may create a new file, and transfer (for example, copy or cut) the second difference object from the first source file to the new file, to obtain the patch source file. Optionally, the patch server may transfer, to the new file, the code segment in which the second difference object is located and the header file on which the second difference object depends in the first source file, to obtain the patch source file.

Optionally, if the first source file includes a plurality of source files, when transferring the second difference object in the first source file to the patch source file, the patch server may transfer, to the patch source file based on an execution order of each source file in the plurality of source files, a code segment in which the second difference object included is located and a header file on which the second difference object depends in each source file.

S305: The patch server performs derivation reconstruction on the patch source file.

During static compilation, compilation performed on the patch source file by the patch server depends on the project of the app 1. In other words, the patch source file is compiled based on the project of the app 1. It is considered that there is a process of filling in a relative address and/or an absolute address during static compilation. If the project of the app 1 on which the patch server depends when compiling the patch source file is different from the original project of the app 1 archived in the patch server, the relative address and/or the absolute address filled in during compilation may be misplaced, resulting in low reliability of a compilation result. Therefore, to improve reliability of the compilation result, the patch server may compile the patch source file based on the original project of the app 1.

Optionally, that the patch server compiles the patch source file based on the original project includes but is not limited to the following two implementations:
Implementation 1: The patch server may copy the archived original project and compile the copied original project and the patch source file.
Implementation 2: The patch server may restore the patch project based on the original project, that is, replace the second difference object in the patch project with the third difference object, to obtain the restored patch project, where the restored patch project is the same as the original project archived in the patch server, and the patch server may compile the restored patch project and the patch source file. In the following embodiment, an example in which the patch server compiles the restored patch project and the patch source file is used.

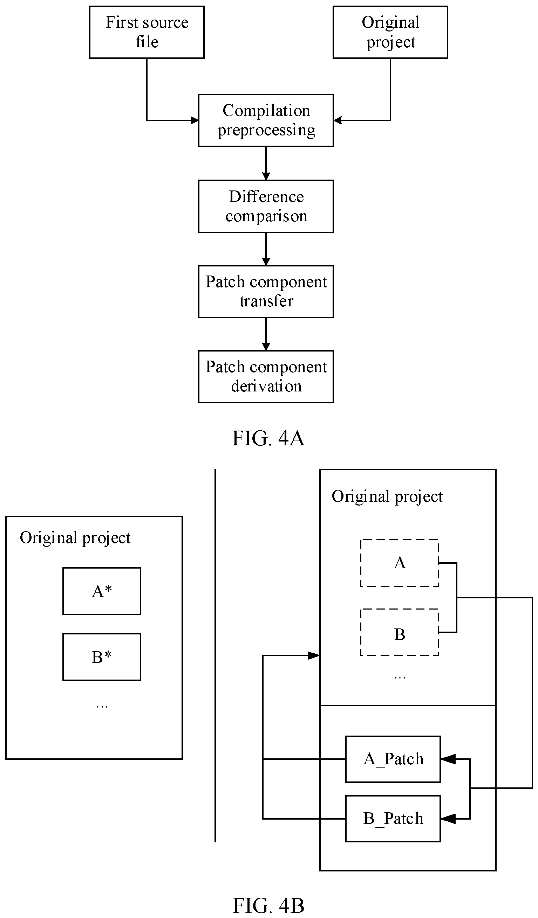

Optionally, it is considered that the restored patch project does not invoke content included in the patch source file, that is, there is no link relationship between the patch source file and the restored patch project. During compilation, the patch server may not compile the patch source file, and optimize and delete the patch source file. Therefore, to establish a link between the patch source file and the restored patch project, and reduce a probability of a static compilation conflict after the link is established, the patch server may perform derivation and reconstruction on the patch source file. For a process in which the patch server performs derivation and reconstruction on the patch source file, refer to FIG. 4A and FIG. 4B.

For example, the patch server may add a compilation keyword to the patch source file, or add the compilation keyword to the second difference object, to forcibly compile the second difference object in the patch source file. Optionally, the compilation keyword added by the patch server to the patch source file is related to a compiler used by the patch server during project compilation. For example, the patch server performs project compilation by using an IAR compiler, and the patch server may add "_root" to the patch source file or the second difference object, to forcibly compile the second difference object in the patch source file.

The patch server may further add a first identifier to the second difference object in the patch source file, to distinguish the second difference object in the patch source file from the third difference object in the patch project. For example, the patch server may add a patch suffix to the second difference object.

The patch server may further check whether the patch source file meets a syntax rule, for example, check a code segment included in the second difference object and a header file on which each second difference object depends in the patch source file; and if the patch source file does not meet the syntax rule, adjust, based on an order of a code segment included in the third difference object, an order of a code segment included in the second difference object, and adjust, based on an order of a header file on which each difference object in the third difference object depends, an order of a header file on which each object in the second difference object depends, so that orders of the code segment included in the second difference object and the dependent header file in the patch source file are the same as orders of the code segment included in the third difference object and the dependent header file in the second source file. For example, the second difference object includes a function A and a function B, and a code segment in which the function A is located is before a code segment in which the function B is located in the second source file. If a code segment in which the function A is located is behind a code segment in which the function B is located in the patch source file, the patch server may adjust an order of the code segment in which the function A is located and an order of the code segment in which the function B is located. In an adjusted patch source file, the code segment in which the function A is located is before the code segment in which the function B is located. Optionally, after adjusting the order of the code segment in which the function A is located and the order of the code segment in which the function B is located, the patch server may further adjust an order of a header file on which the function A depends and an order of a header file on which the function B depends, and an adjusted order of the header file on which the function A depends and an adjusted order of the header file on which the function B depends are the same as the order of the code segment in which the function A is located and the order of the code segment in which the function B is located. If the order of the code segment in which the function A is located and the order of the code segment in which the function B is located in the patch source file are the same as the order of the code segment in which the function A is located and the order of the code segment in which the function B is located in the second source file, the patch server may further determine the order of the header file (for example, a header file A) on which the function A depends and the order of the header file (for example, a header file B) on which the function B depends, and determine whether the order of the header file A and the order of the header file B are the same as the order of the code segment in which the function A is located and the order of the code segment in which the function B is located. If the orders are different, the patch server may further adjust the order of the header file A and the order of the header file B, so that the adjusted order of the header file A and the adjusted order of the header file B are the same as the order of the code segment in which the function A is located and the order of the code segment in which the function B is located.

The patch server may further parse a target object (for example, an invoked static function or global variable) invoked by the second difference object, and determine whether the target object exists in the patch source file. If the target object does not exist in the patch source file, the patch server may obtain a storage address of the target object according to an archived map mapping table, obtain content of the target object from the storage address, and translate the invocation performed by the second difference object in the patch source file to the original project into access to the absolute address.

S306: The patch server performs compilation redirection configuration on the patch source file.

After performing derivation and reconstruction on the patch source file, the patch server may trigger compilation and building, to compile the restored patch project and a derived and reconstructed patch source file. Optionally, to prevent content generated after the patch source file is compiled from affecting content generated after the original project is compiled, before the patch server compiles the restored patch project and the derived and reconstructed patch source file, the patch server may perform compilation redirection configuration on the patch source file.

For example, the patch server may create a patch area based on a file (for example, the file 1) that is submitted by the research and development personnel and that indicates to create a patch area, to store content generated when the patch server compiles the patch source file. For example, for a chip MCU-1, the file submitted by the research and development personnel indicates that an address unit 00000-00009 included in a ROM is used as a patch area, and an address unit 0001A-0001D included in a RAM is used as a patch area. When receiving the file 1 from the research and development personnel, the patch server may enable a thread of the compiler to occupy the address unit 00000-00009 of the ROM and the address unit 0001A-0001D of the RAM of the MCU-1, and prohibit other data from being written.

The patch server may further add a second identifier to the patch source file. For example, the second identifier may be a key field, or may be a description. After being compiled by the compiler, the second identifier may be used to prohibit a terminal device from initializing data in the patch package by using a kernel. The initialization means to load an initialized value of dynamic data in the patch package to the RAM. The dynamic data is data that needs to run on the RAM. For example, there is a global variable in the patch source file, and an initialized value of the global variable is stored in the ROM. When performing system initialization, the terminal device loads the initialized value to the RAM by using the kernel, to initialize the global variable. If the initialization is performed by using the kernel, the kernel needs to generate an initialization function corresponding to the dynamic data, which causes a change of the original project. Therefore, before compiling the patch source file, the patch server may add the second identifier to the patch source file, to prohibit the terminal device from initializing the dynamic data in the patch package by using the kernel.

Optionally, after the patch server adds the second identifier to the patch source file, to enable the terminal device to initialize patch data corresponding to the dynamic data after loading the patch package, the patch server may further generate an initialization migration function based on the dynamic data, and mount the initialization migration function to an initialization procedure file of the terminal device in a form of a hook function, so that when performing the system initialization, the terminal device loads the dynamic data in the patch package to the RAM by using the initialization migration function.

The patch server may further obtain a redirection configuration template of a target compiler, where the target compiler is a compiler configured to compile the restored patch project and the patch source file. The redirection configuration template may be submitted by the research and development personnel. Compilation orientation information of a section is configured in the redirection configuration template, and the compilation orientation information of the section indicates a compilation address of each section in the patch source file. For example, the compilation orientation information of the section configured in the redirection configuration template indicates to compile a code segment in the patch source file to the patch area of the ROM, and compile a data segment in the patch source file to the patch area of the RAM. It may be understood that sections configured by different compiler research and development personnel may have different names, but the redirection configuration template is fixed. Alternatively, the redirection configuration template may be a system default template, and the system default configuration template indicates to compile content of the entire patch source file to the ROM.

Optionally, a process in which the target compiler compiles the content of the patch source file to a location indicated by the redirection configuration template may be guided by using a project configuration file. Therefore, optionally, after obtaining the redirection configuration template, the patch server may further copy the redirection configuration template to the project configuration file.

S307: The patch server compiles the patch source file based on a first project to obtain the patch package.

When compiling the restored patch project and the patch source file by using the target compiler, the patch server compiles, by using the target compiler, the patch source file to the location indicated by the redirection configuration template, to obtain a first image file, and extracts the patch package from the first image file.

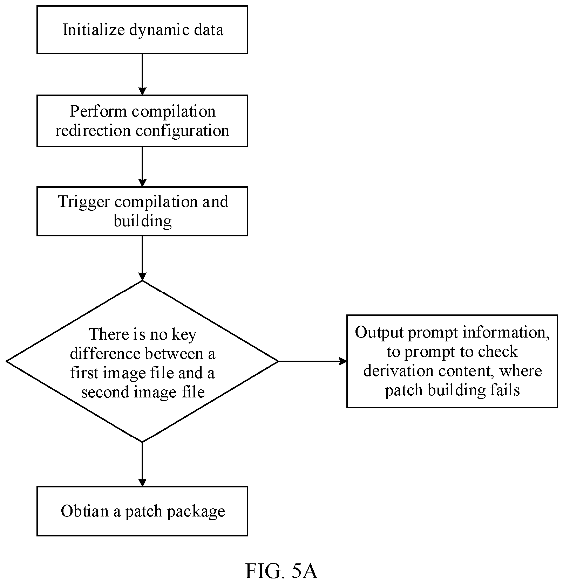

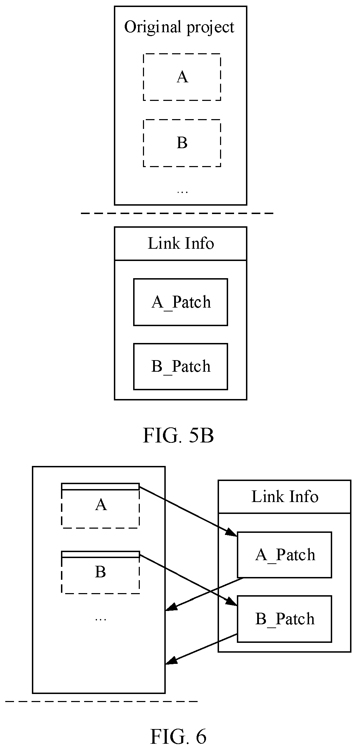

Refer to FIG. 5A and FIG. 5B. Optionally, before extracting the patch package from the first image file, the patch server may further compare the first image file with a second image file archived after the original project is compiled, to determine difference content of the first image file and the second image file, and determine whether the difference content includes only unrelated data such as compilation time and a version number and data of the patch area. If yes, it indicates that the patch package may be extracted based on the first image file. If no, it indicates that the patch package fails to be built, and the patch package is not extracted from the first image file. Alternatively, the patch server may further obtain an address range of the second image file, obtain data from the first image file based on the address range, and compare data obtained from the first image file with data of the second image file. If key data other than the unrelated data such as the compilation time and the version number in the data obtained from the first image file and the data of the second image file is the same, the patch server may extract the patch package from the first image file. If some key data other than the unrelated data such as the compilation time and the version number in the data obtained from the first image file and the data of the second image file is different, the patch server does not obtain the patch package from the first image file. Optionally, if the patch package fails to be built, the patch server may further output prompt information to prompt the research and development personnel to check the derived and reconstructed patch source file, so as to determine a cause of the patch package building failure.

If it is determined that the patch package can be obtained from the first image file, the patch server cuts the first image file to obtain the patch file compiled to the patch area, and adds, to the patch file, link information of each to-be-remedied object (for example, a to-be-remedied function) and a patch function and basic information necessary for generating the patch package, to obtain the patch package, where a header of the patch package includes the link information and the basic information. The basic information includes, for example, version information, check information, and/or backup information, the to-be-remedied function is the third difference object in the original project, the patch function is the second difference object in the patch source file, and the link information is used to associate the to-be-remedied function with the patch function. Optionally, the link information includes information such as address mapping information of the to-be-remedied function and the patch function corresponding to the to-be-remedied function, and a jump instruction.

In some embodiments, after obtaining the patch package, the patch server may further push the patch package to the terminal device. Optionally, the patch server may directly push the patch package to the terminal device. Alternatively, the patch server may send the patch package to an electronic device that manages the terminal device, for example, a mobile phone, and push the patch package to the terminal device by using the mobile phone. For example, the terminal device is a smartwatch. The patch server may push the patch package to a mobile phone that manages the smartwatch, and the mobile phone pushes the patch package to the smartwatch by using an application (for example, a Health app on a Huawei mobile phone) that is installed on the mobile phone and used to manage the smartwatch. The terminal device loads the patch package to the patch area by using a front-end patch engine, executes the initialization migration function obtained in S306 to initialize information in the patch package, then generates jump machine code based on the address mapping information of the to-be-remedied function and the patch function in the header of the patch package, replaces the stored header of the to-be-remedied function with the jump machine code, and updates the check information to complete patch activation. Optionally, before replacing the header of the to-be-remedied function with the jump machine code, the terminal device may further back up header data of the to-be-remedied function to the patch package, to roll back the patch when the patch activation fails.

Optionally, the patch package further stores a program running process of the app 1 after the terminal device activates the patch package, as shown in FIG. 6. Optionally, when executing the to-be-remedied function, the terminal device may jump to the patch package based on the jump machine code, and obtain the jump instruction from a .data_init partition of the patch package, to implement function jump.

In the foregoing technical solution, the patch server performs difference parsing on source code or an intermediate file obtained after compilation preprocessing is performed on the source code, transfers a difference object to the patch source file, and performs derivation reconstruction on the patch source file. This reduces dependency on a compiler capability during compilation, and reduces dependency on a platform tool during compilation, so that a process of making the patch package is more universal. In addition, redirection management is performed on the compilation section in the patch source file, and the initialization migration function for initializing the dynamic data in the patch source file is generated, so that impact of patch content on the original project can be avoided.

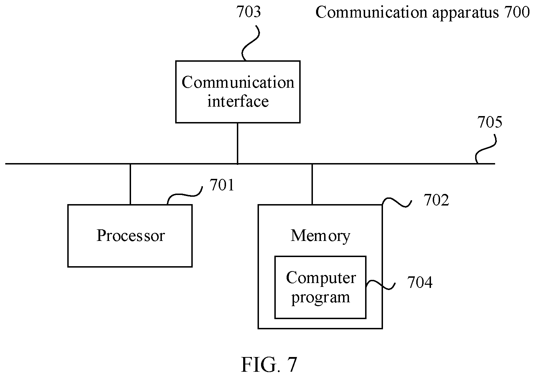

The following describes a diagram of a structure of a communication apparatus according to an embodiment of this application. Refer to FIG. 7. The communication apparatus 700 may be the patch server described above. The communication apparatus 700 may include one or more processors 701, one or more memories 702, a communication interface 703, and one or more computer programs 704. The foregoing components may be connected through one or more communication buses 705. The one or more computer programs 704 are stored in the memory 702 and are configured to be executed by the one or more processors 701, and the one or more computer programs 704 include instructions. For example, the foregoing instructions may be used to perform related steps of the patch server in the foregoing corresponding embodiment. The communication interface 703 is configured to implement communication between the patch server and another device (for example, a terminal device like a mobile phone or a smartwatch). For example, the communication interface may be a transceiver.

An embodiment of this application further provides a computer program product, including a computer program. When the computer program is run on a computer, the computer is enabled to perform the method according to the foregoing embodiment.

An embodiment of this application further provides a chip system, including a processor and an interface. The processor is configured to invoke instructions from the interface and run the instructions, to enable the chip system to implement the method according to the foregoing embodiment.

In the foregoing embodiments provided in this application, the method provided in embodiments of this application is described from the perspective in which the communication apparatus is used as an execution body. To implement the functions in the methods provided in embodiments of this application, the terminal device may include a hardware structure and/or a software module, and implement the foregoing functions in a form of a hardware structure, a software module, or a combination of a hardware structure and a software module. Whether a function in the foregoing functions is performed by using the hardware structure, the software module, or the combination of the hardware structure and the software module depends on particular applications and design constraints of the technical solutions.

As used in the foregoing embodiments, according to the context, the term "when" may be interpreted as a meaning of "if" or "after". Similarly, according to the context, the phrase "when it is determined that..." or "if (a stated condition or event) is detected" may be interpreted as a meaning of "if it is determined that...", "in response to determining...", "when (a stated condition or event) is detected", or "in response to detecting (a stated condition or event)".

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or other programmable apparatuses. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive), or the like.

For a purpose of explanation, the foregoing description is described with reference to a specific embodiment. However, the foregoing example discussion is not intended to be detailed, and is not intended to limit this application to a disclosed precise form. Based on the foregoing teaching content, many modification forms and variation forms are possible. Embodiments are selected and described to fully illustrate the principles of this application and practical application of the principles, so that other persons skilled in the art can make full use of this application and various embodiments that have various modifications applicable to conceived specific usage.

## Claims

1. A patch package obtaining method, wherein the method comprises:
determining a first difference object based on a difference between a first source file and a second source file, wherein the first source file is used to remedy a vulnerability of the second source file, the second source file is a source file that is associated with the first source file and that is in a first project, and the first project comprises one or more source files;
obtaining a patch source file based on a code segment and a header file of a second difference object, wherein the second difference object is an object that is comprised in the first difference object and that belongs to the first source file; and
compiling the patch source file based on the first project to obtain a patch package.

2. The method according to claim 1, wherein the determining a first difference object based on a difference between a first source file and a second source file comprises:
performing difference comparison on the first source file and the second source file according to a syntax rule of the second source file, to determine difference content of the first source file and the second source file; and
determining that a syntax structure corresponding to the difference content is the first difference object, wherein the syntax structure is used to define a function, a variable, and/or a constant.

3. The method according to claim 1 or 2, wherein the method further comprises:
adding a first identifier to the second difference object, wherein the first identifier is used to distinguish between the second difference object and a third difference object, and the third difference object is an object that is comprised in the first difference object and that belongs to the second source file.

4. The method according to any one of claims 1 to 3, wherein the method further comprises:
adding a compilation keyword to the patch source file; or
adding the compilation keyword to the second difference object, wherein
the compilation keyword is used for forcible compilation.

5. The method according to any one of claims 1 to 4, wherein the compiling the patch source file based on the first project to obtain a patch package comprises:
restoring a second project based on the first project, wherein the second project comprises at least one source file, and the at least one source file comprises the first source file; and
compiling the restored second project and the patch source file to obtain the patch package.

6. The method according to claim 5, wherein the compiling the patch source file comprises:
obtaining a redirection configuration template of a target compiler, wherein the target compiler is a compiler configured to compile the second project and the patch source file, and the redirection configuration template indicates a compilation location of the patch source file; and
compiling the patch source file to the location indicated by the redirection configuration template.

7. The method according to claim 5 or 6, wherein the compiling the patch source file comprises:
determining a target object invoked by the second difference object, wherein the target object comprises a target function, a target variable, and/or a target constant;
if the target object belongs to the first project, obtaining a storage address of the target object;
obtaining the target object based on the storage address; and
compiling the second difference object based on the obtained target object.

8. The method according to any one of claims 5 to 7, wherein the compiling the second project and the patch source file to obtain the patch package comprises:
compiling the second project and the patch source file to obtain a first image file; and
extracting the patch package from the first image file.

9. The method according to claim 8, wherein before the extracting the patch package from the first image file, the method further comprises:
obtaining an address range of a second image file, and obtaining data of the first image file within the address range, wherein the second image file is an image file obtained by compiling the first project;
comparing the data of the first image file within the address range with the second image file; and
determining that a difference between the data of the first image file within the address range and the second image file comprises only compilation time and/or a version number.

10. The method according to claim 8 or 9, wherein the extracting the patch package from the first image file comprises:
extracting a patch file from the first image file, wherein the patch file is a file compiled to the location indicated by the redirection configuration template; and
adding link information of the second difference object and the third difference object, and first information to the patch file, to obtain the patch package, wherein the link information is used to associate the second difference object with the third difference object, the third difference object is the object that is comprised in the first difference object and that belongs to the second source file, the first information is basic information of the patch package, and the first information comprises one or more of version information, check information, or backup information.

11. The method according to any one of claims 1 to 10, wherein the method further comprises:
adjusting, based on orders of a code segment and a header file comprised in the third difference object, orders of the code segment and the header file comprised in the second difference object, so that adjusted orders of the code segment and the header file comprised in the second difference object are the same as the orders of the code segment and the header file comprised in the third difference object.

12. The method according to any one of claims 1 to 11, wherein the method further comprises:
adding a second identifier to the patch source file, wherein the second identifier is used to prohibit initializing data in the patch package by using a kernel.

13. The method according to claim 12, wherein the method further comprises:
generating an initialization migration function based on the patch source file, wherein the initialization migration function is used to initialize the data in the patch package.

14. The method according to any one of claims 1 to 13, wherein the method further comprises:
performing compilation preprocessing on the first source file and the second source file, wherein the compilation preprocessing comprises one or more of the following:
deleting a comment and content not involved in compilation from the first source file and the second source file;
replacing, with a function, content that is in the first source file and the second source file and that is used to invoke the function; or
replacing a macro in the first source file and the second source file with a source language statement.

15. A communication apparatus, comprising:
a processor, a memory, and one or more programs, wherein
the one or more programs are stored in the memory, the one or more programs comprise instructions, and when the instructions are executed by the processor, the communication apparatus is enabled to perform steps of the method according to any one of claims 1 to 14.

16. A computer-readable storage medium, wherein the computer-readable storage medium is configured to store a computer program, and when the computer program is run on a computer, the computer is enabled to perform the method according to any one of claims 1 to 14.
